Europäisches Patentamt

European Patent Office

Office européen des brevets

(19)

(11) Veröffentlichungsnummer: **0 234 003**
**B1**

(12) **EUROPÄISCHE PATENTSCHRIFT**

(45) Veröffentlichungstag der Patentschrift:
**15.03.89**

(51) Int. Cl.⁴: **B60R 21/02**

(21) Anmeldenummer: **86116183.4**

(22) Anmeldetag: **21.11.86**

(54) **Fahrzeug mit einer Vorrichtung zur Nutzung der Aufprallenergie für eine Sicherheitseinrichtung zum Schutz der Fahrzeuginsassen.**

(30) Priorität: **21.02.86 DE 3605599**

(43) Veröffentlichungstag der Anmeldung:
**02.09.87 Patentblatt 87/36**

(45) Bekanntmachung des Hinweises auf die Patenterteilung:
**15.03.89 Patentblatt 89/11**

(84) Benannte Vertragsstaaten:
**AT DE ES FR GB IT SE**

(56) Entgegenhaltungen:
**WO-A-85/01709**
**DE-A- 2 402 163**
**DE-A- 3 337 232**
**DE-A- 3 417 863**
**US-A- 3 938 825**

(73) Patentinhaber: **AUDI AG, Postfach 220,
D-8070 Ingolstadt(DE)**

(72) Erfinder: **Piech, Ferdinand, Dipl.-Ing., Gerolfinger
Strasse 128, D-8070 Ingolstadt(DE)**

(74) Vertreter: **Engelhardt, Harald, Audi AG Postfach 2 20,
D-8070 Ingolstadt(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf ein Fahrzeug mit einer Vorrichtung zur Nutzung der Aufprallenergie für eine Sicherheitseinrichtung zum Schutz der Fahrzeuginsassen gemäß dem Oberbegriff des Anspruchs 1.

Ein gattungsgemäßes Fahrzeug ist aus der DE-OS 3 337 232 bekannt. Dort ist ein im Frontbereich des Fahrzeuges angeordnetes Antriebsaggregat beschrieben, welches in seinem dem Fahrgastraum zugewandten Bereich ein Seil aufnimmt. Dieses Seil ist unter Zwischenschaltung einer Umlenkung mit einer Sicherheitseinrichtung zum Schutz der Fahrzeuginsassen verbunden. Eine solche Sicherheitseinrichtung kann dazu bestimmt sein, das Lenkrad des Fahrzeugs aus dem möglichen Kopfaufschlagbereich herauszubewegen, eine Sitzvorderkante anzuheben oder einen Sicherheitsgurt stramm zu ziehen. Bei einem Frontaufprall ab einer bestimmten Größe wird das Antriebsaggregat des Fahrzeuges nach hinten verschoben, so daß eine Relativbewegung zwischen dem Antriebsaggregat und einem weiter hinten angeordneten Bereich der Fahrzeugkarosserie eintritt. Diese Relativverschiebung wird durch das am Antriebsaggregat festgelegte Seil auf die Sicherheitseinrichtung übertragen, wodurch diese in ihre Wirkstellung gelangt. Diese bekannte Ausbildung setzt voraus, daß das Antriebsaggregat im Bug des Fahrzeuges angeordnet ist.

Bei einer aus der DE-OS 1 655 597 bekannten Ausbildung ist ein längsverschieblicher Stoßfänger vorgesehen, an dessen Halteteil ein Seil befestigt ist. Wird der Stoßfänger bei einem Frontaufprall belastet, dann verschiebt er sich zusammen mit seinem Halteteil nach hinten. Dies hat zur Folge, daß das über mehrere Umlenkstellen zu einer die Lenksäule tragenden Konsole geführte Seil die Konsole nach vorne zieht, wodurch das Lenkrad vom Fahrer wegbewegt wird. Dieser Mechanismus ist nicht nur sehr aufwendig, sondern in der Praxis auch kaum brauchbar, da er bereits bei kleineren Stößen auf den Stoßfänger wirksam wird und einen sehr hohen Reparaturaufwand nach sich zieht, um die Sicherheitseinrichtung wieder in die Ausgangslage zurückzubringen.

Der Erfindung liegt die Aufgabe zugrunde, ein gattungsgemäßes Fahrzeug mit einer Vorrichtung zur Nutzung der Aufprallenergie so weiterzubilden, daß ein zuverlässiger Insassenschutz auch bei ohne einem Frontmotor ausgeführten Fahrzeugen gewährleistet ist.

Die Aufgabe wird durch die kennzeichnenden Merkmale des Anspruchs 1 gelöst.

Durch das längsverschieblich im Frontbereich des Fahrzeuges angeordnete Längsglied wird bei einem Frontaufprall eine Relativbewegung zwischen dem Längsglied und einem angrenzenden Karosseriebereich erzeugt, welche in an sich bekannter Weise dazu benutzt wird, um über ein Seil eine Sicherheitseinrichtung in Wirkstellung zu bringen. Somit ist eine Möglichkeit geschaffen, auch bei Fahrzeugen ohne einen Frontmotor welcher gemäß der DE-OS 3 337 232 diese Aufgabe übernimmt, eine gleichermaßen zuverlässig wirkende Vorrichtung zu schaffen.

Gemäß einem weiteren Merkmal des Anspruchs 1 endet das Längsglied im Abstand von der vorderen Karosseriebegrenzung, wodurch sichergestellt ist, daß die Vorrichtung erst ab einer vorbestimmten Größenordnung wirksam wird. Dies bedeutet keine Einschränkung bezüglich der Sicherheit, da es ohne weiteres möglich ist, den Abstand so zu wählen, daß die Vorrichtung erst dann wirksam wird, wenn sie tatsächlich erforderlich ist. Eine Abstimmung ist insbesondere dadurch möglich, daß die Längsträger des Vorbaus mehr oder weniger weit gegenüber dem drucksteifen Längsglied nach vorne vorstehen.

Ist das Längsglied ohne Überwindung größerer Kräfte längsverschiebbar im Frontbereich des Fahrzeuges aufgenommen, dann kann das Längsglied relativ schwach dimensioniert werden. Es muß nur sichergestellt sein, daß sich bei einem Frontaufprall das Längsglied, ohne daß es ausknickt, nach hinten verschiebt. Ist das Längsglied hingegen an einem anderen Bauteil angebunden, dann muß es je nach der zum Verschieben zu überwindenden Kraft steifer ausgeführt sein als die Elemente des Vorbaus, insbesondere die Längsträger, da ansonsten keine Verschiebung des Längsgliedes, sondern zunächst eine Verformung desselben eintritt.

Bei einem Fahrzeug mit einem Heck- oder Mittelmotor und einer von dort zur Vorderachse geführten Antriebswelle in einem sogenannten Zentralrohr ist es von Vorteil, wenn das Längsglied durch einen über die Vorderachse hinaus verlängerten Abschnitt des Zentralrohres gebildet ist. Eine solche Ausbildung ermöglicht ohne großen Bauaufwand die Realisierung der Erfindung. Dieses Zentralrohr dürfte in den meisten Fällen ohne zusätzliche Maßnahmen eine größere Steifigkeit als die im Frontbereich des Fahrzeugs angeordneten Längsträger aufweisen. Ein weiterer Vorteil bei Einsatz des Zentralrohres ist dadurch gegeben, daß die zu den Sicherheitseinrichtungen (z. B. zu Gurtaufwickelautomaten) führenden Seile nicht umgelenkt zu werden brauchen, wenn sie nach hinten geführt und dort an das Zentralrohr angeschlossen werden können.

Wird das Längsglied nach vorne V-förmig aufgezweigt, dann wird dadurch erreicht, daß die Vorrichtung auch bei einem Schrägaufprall wirksam wird. Das V-förmige Längsglied kann sowohl als separates Teil, als auch in Verbindung mit einem verlängerten Zentralrohr eingesetzt werden.

Der Anspruch 4 kennzeichnet eine besonders vorteilhafte Ausbildung bei Fahrzeugen mit zwei im Frontbereich angeordneten Längsträgern. Durch die gekennzeichnete Anordnung der Längsglieder in den Längsträgern wird kein zusätzlicher Raum genötigt, sondern ein vorhandener, meist nicht benötigter Raum ausgenutzt. Durch diese Anordnung ist auch sichergestellt, daß bei einem einseitigen Aufprall der Verformungsweg weitestgehend über das Seil der Sicherheitseinrichtung zur Verfügung steht. In diesem Zusammenhang darf darauf hingewiesen werden, daß bereits ein geringer Verformungsweg ausreicht, um die Sicherheitseinrichtung in Wirkstellung zu bringen. Da genügend Kraft zur Verfügung steht, ist es nämlich möglich, ohne weiteres Übersetzungen vorzusehen, um den gewünschten Weg zu erreichen.

Bei Fahrzeugen mit im Frontbereich angeordneten und in Längsträgern aufgenommenen Pralldämpfern für den Stoßfänger des Fahrzeuges können gemäß einer vorteilhaften Weiterbildung der Erfindung die in den Längsträgern aufgenommenen Gehäuse der Pralldämpfer die Längsglieder bilden. Diese Verwendung stellt sicher, daß für die Längsglieder keine separaten Bauteile erforderlich sind, sondern im Fahrzeug vorhandene Teile einer neuen Verwendung zugeführt werden. Dadurch können Gewicht und Kosten eingespart werden.

Um bei in den Längsträgern angeordneten Längsgliedern die Relativverschiebung auf die Sicherheitseinrichtung zu übertragen, ist es notwendig, daß die Längsträger etwa im Endbereich der Längsglieder auf den einander zugewandten Seiten mit einer Aussparung versehen sind, durch die die an jedem Längsglied festgelegten Seile hindurchgeführt sind. Die Seile werden zweckmäßig etwa in der Fahrzeugmitte zusammengefaßt und dort in einem gemeinsamen Seil weitergeführt. Damit unabhängig davon, ob der Aufprall einseitig oder zweiseitig erfolgt, stets ein nach vorne gerichteter Seilzug erreicht wird, ist das gemeinsame, zu den Sicherheitseinrichtungen geführte Seil in einer in ihren Endbereichen aufgeweiteten Hülse aufgenommen. Die Hülse muß keinen geraden Verlauf nehmen; sie kann vielmehr den baulichen Gegebenheiten angepaßt und in Form eines Bowdenzuges in einen günstigen Bereich verlegt werden. An dem dem Fahrzeugbug abgewandten Ende der Hülse ist diese wiederum aufgeweitet, um die Seilreibung im Kollisionsfall zu reduzieren. Von diesem Ende der Hülse kann das Seil zu der Sicherheitseinrichtung (beispielsweise zu einer Konsole für die Lenksäule, welche bei einem Frontaufprall vom Fahrer wegbewegt wird) geführt sein. Sollen mehrere Sicherheitseinrichtungen betätigt werden, dann müssen nur etwa im Bereich des Seilaustritts aus der Hülse entsprechende, zu den anderen Sicherheitseinrichtungen führende Seile angeschlossen werden.

Bei einem Frontaufprall werden die in den Längsträgern untergebrachten Längsglieder nach hinten verschoben, während sich die Längsträger in ihrem Frontbereich verformen. Dies hat zur Folge, daß die an den Enden der Längsglieder festgelegten und durch die Aussparungen in den Längsträgern hindurchgeführten Seile in gewünschter Weise gezogen werden.

Die Längsglieder, die auch wie vorstehend erwähnt durch die Gehäuse der Pralldämpfer gebildet sein können, werden zweckmäßig an ihrem vorderen Ende mit dem zugeordneten Längsträger verbunden. Diese Maßnahme ist jedoch nicht zwingend, da sie auch in anderer Weise in den Längsträgern befestigt werden können, ohne daß die Gefahr besteht, daß sie bei einem Frontaufprall – genauso wie die Längsträger – verformt werden.

Mehrere Ausführungsbeispiele der Erfindung sind in der Zeichnung dargestellt und werden nachfolgend näher beschrieben. Es zeigt
Fig. 1 in schematischer Darstellung eine Draufsicht auf ein Fahrzeug mit einem Heckmotor und einem im Frontbereich angeordneten Längsglied,
Fig. 2 ein Fahrzeug mit einem im Heck angeordneten Antriebsaggregat und einem Zentralrohr, durch welches eine Antriebswelle zum Antrieb der Vorderachse geführt ist, wobei das Zentralrohr über die Vorderachse hinaus verlängert ist,
Fig. 3 eine Ausführungsform, bei der das Längsglied V-förmig ausgebildet ist,
Fig. 4 ein V-förmig ausgebildetes Längsglied in Verbindung mit einem Zentralrohr,
Fig. 5 eine Anordnung mit zwei in Längsträgern der Fahrzeugkarosserie angeordneten Längsgliedern,
Fig. 5a einen der Längsträger aus Fig. 5 nach einem Frontaufprall und
Fig. 6 eine Ausbildung, bei der die in den Längsträgern angeordneten Längsglieder durch Gehäuse von Pralldämpfern für einen Stoßfänger gebildet sind.

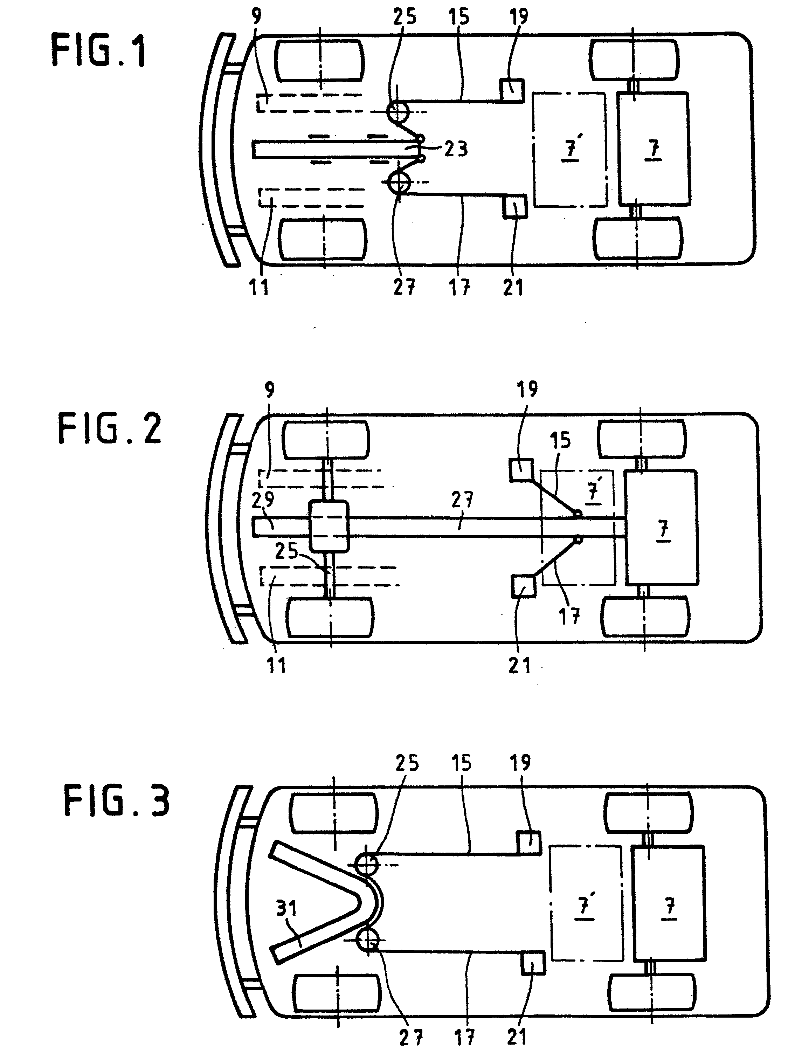

Ein in Fig. 1 schematisch in Draufsicht dargestellter Personenkraftwagen ist mit einem im Heckbereich angeordneten Antriebsaggregat 7 ausgerüstet. Anstelle der Anordnung im Fahrzeugheck kann auch eine Anordnung vor der Hinterachse (sogenannter Mittelmotor) gegeben sein. Die letztgenannte Alternative ist strichpunktiert dargestellt und mit dem Bezugszeichen 7' versehen. Im Frontbereich des Personenkraftwagens erstrecken sich unter anderem zwei Längsträger 9 und 11 der nur in ihren Umrissen dargestellten selbsttragenden Karosserie 13 des Personenkraftwagens.

Im Frontbereich des Personenkraftwagens ist eine Vorrichtung angeordnet, durch welche bei einem Frontaufprall Sicherheitsgurte gestrammt werden. Dazu sind zwei Seile 15 und 17 vorgesehen, welche mit Aufwickelvorrichtungen 19 und 21 für die zugeordneten Sicherheitsgurte in Verbindung stehen.

Die Seile 15 und 17 sind an dem rückwärtigen Ende eines im Frontbereich des Personenkraftwagens angeordneten Längsgliedes 23 befestigt und über je eine Umlenkrolle 25 und 27 zu den entsprechenden Aufwickelvorrichtungen 19 und 21 geführt.

Bei einem Frontaufprall ab einer bestimmten Größenordnung werden die Längsträger 9 und 11 in ihrem vorderen Bereich verformt. Da das Längsglied 23 eine ausreichende Steifigkeit besitzt und nach hinten ausweichen kann, werden durch diese Bewegung die Seile 15 und 17 über die zugeordneten Umlenkrollen 25 und 27 nach vorne gezogen, wodurch die Sicherheitsgurte über die Aufwickelvorrichtungen 19 und 21 gestrammt werden.

Für die nachfolgenden Ausführungsbeispiele wird ein Aufbau wie in Fig. 1 gezeigt und beschrieben zugrundegelegt, weshalb für gleiche Teile auch die gleichen Bezugszeichen verwendet werden.

Fig. 2 zeigt eine Anordnung, bei der über das im Fahrzeugheck angeordnete Antriebsaggregat nicht nur die Hinterräder, sondern auch die Vorderräder angetrieben werden. Dazu ist das Antriebsaggregat 7 mit der Vorderachse 25 über ein Zentralrohr 27, welches eine Antriebswelle aufnimmt, verbunden. Wie aus Fig. 2 unmittelbar ersichtlich, erstreckt sich ein vorderer Abschnitt 29 des Zentralrohres 27 über die Vorderachse hinaus. Dieser Abschnitt 29 ist steifer als die vorderen Längsträger 9 und 11 ausgebildet, so daß bei einem Frontaufprall sich nur letztere verformen, während das Zentralrohr 29 mit seinem Abschnitt 29 nach hinten bewegt wird. Durch diese Bewegung werden am Zentralrohr 27 befestigte Seile 15 und 17 gezogen und über diese in den Aufwickelvorrichtungen 19 und 21 aufgenommene Sicherheitsgurte gestrammt.

In Fig. 3 ist ein Ausführungsbeispiel dargestellt, bei dem im Frontbereich des Personenkraftwagens ein V-förmig ausgebildetes Längsglied 31 angeordnet ist. Das Längsglied 31 stößt bei einem Frontaufprall ab einer bestimmten Größenordnung in eine Seilschlaufe 33, welche über Umlenkrollen 25 und 27 mit zu den Aufwickelvorrichtungen 19 und 21 führenden Seilabschnitten 15 und 17 verbunden ist. Gegenüber den vorbeschriebenen Ausführungsbeispielen wird durch das V-förmige Längsglied 31 in besonderem Maße erreicht, daß die Vorrichtung auch bei einem schrägen Aufprall von vorne voll wirksam wird.

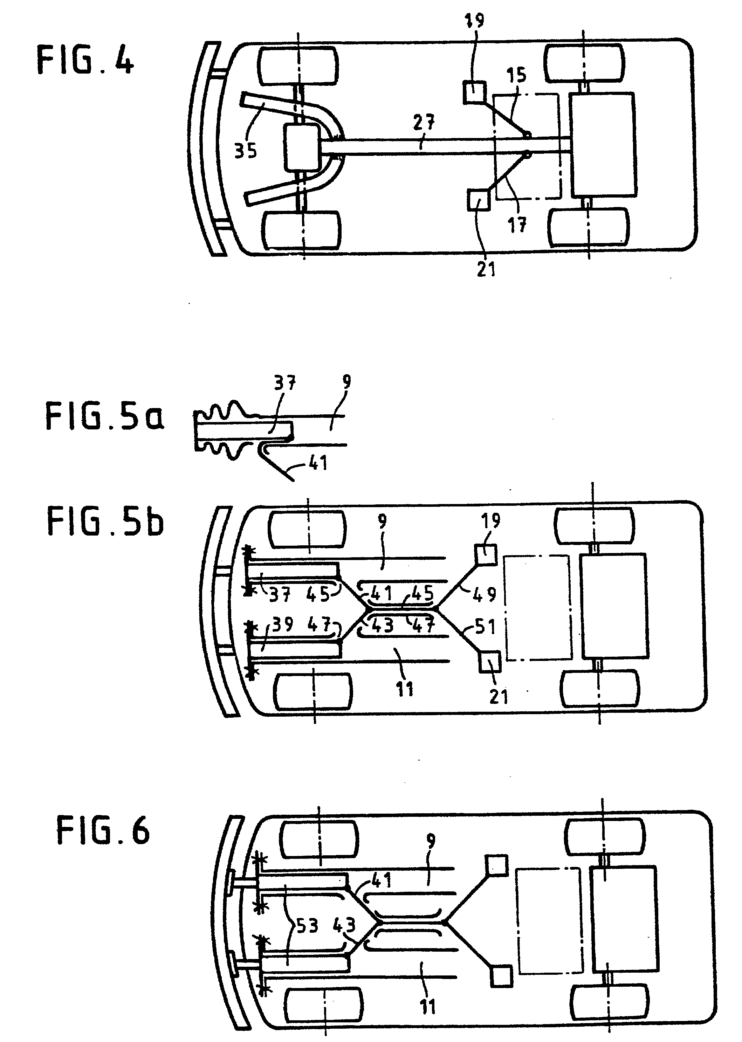

Die Ausführungsform gemäß Fig. 4 zeigt ein weiteres V-förmiges Längsglied 35 in Verbindung mit einem Zentralrohr 27. Das Längsglied 35 ist dort am Zentralrohr 27 befestigt, so daß bei einem Frontaufprall nicht nur das Längsglied, sondern auch das Zentralrohr 27 nach hinten bewegt wird. Dadurch ist es möglich, daß die zu den Aufwickelvorrichtungen 19 und 21 führenden Seile 15 und 17 ohne Umlenkeinrichtungen direkt an einem rückwärtigen Abschnitt des Zentralrohres 27 angeschlossen werden können.

Die Ausführungsform nach Fig. 5 verwendet zwei, mit 37 und 39 bezeichnete Längsglieder. Diese Längsglieder sind in den zugeordneten Längsträgern 9 und 11 aufgenommen, und mit diesen im Frontbereich verbunden. Durch diese Anordnung wird zum einen erreicht, daß für die Längsglieder 37 und 39 kein zusätzlicher Bauraum beansprucht wird und zum anderen die Vorrichtung auch bei einseitigem Frontaufprall voll wirksam ist.

Bei einem Frontaufprall ab einer bestimmten Größenordnung wird der Frontbereich des Personenkraftwagens verformt und damit auch die vorderen Bereiche der Längsträger 9 und 11, wie dies aus Fig. 5a ersichtlich ist. Da die Längsglieder 37 und 39 nur an ihrem vorderen Ende mit den Längsträgern verbunden sind, werden sie in den Längsträgern verschoben. Um diese Relativverschiebung dafür benutzen zu können, daß Sicherheitseinrichtungen (hier Sicherheitsgurtstrammeinrichtungen) in ihre Wirkstellung gelangen, sind an den Enden der beiden Längsglieder 37 und 39 Seilabschnitte 41 und 43 befestigt. Diese werden über der Fahrzeugmitte zugewandten Aussparungen 45 und 47 aus den Längsträgern 9 und 11 herausgeführt. Etwa in der Fahrzeugmitte sind die Seilabschnitte 41 und 43 zusammengeführt, und in einem mittleren Seilabschnitt 45 fortgeführt. Der mittlere Seilabschnitt 45 ist in einer Hülse 47 aufgenommen. Die an ihren Enden aufgeweitete Hülse 47 ermöglicht eine flexible Verlegung des mittleren Seilabschnitts 45 und stellt sicher, daß unabhängig davon, auf welcher Seite der Frontaufprall stattfindet, stets eine ausreichende Seilverschiebung gegeben ist. Vom hinteren Ende der Hülse 47 ist der mittlere Seilabschnitt 45 wieder in zwei Seilabschnitte 49 und 51, die zu den Aufwickelvorrichtungen 19 und 21 führen, aufgespalten. Wenn durch das Seil nur eine Sicherheitseinrichtung beaufschlagt werden soll, dann kann diese Aufspaltung entfallen. Sollen sich mehr als zwei Seilabschnitte an den mittleren Seilabschnitt 45 anschließen, dann kann dies ohne Probleme an der gleichen Stelle geschehen.

Schließlich zeigt Fig. 6 eine Anordnung, die im wesentlichen dem Ausführungsbeispiel gemäß Fig. 5 entspricht. Der wesentliche Unterschied besteht darin, daß dort die beiden Längsglieder durch Gehäuse 53 von Pralldämpfern für einen Stoßfänger 55 gebildet sind. Dadurch übernehmen vorhandene Bauteile eine zusätzliche Aufgabe, wodurch das Gewicht und die Kosten reduziert werden. Für die Pralldämpfer 53 können an sich bekannte Pralldämpfer Verwendung finden, so daß diese Bauteile nicht näher beschrieben zu werden brauchen. Die Pralldämpfer sind geeignet, bei einem Frontaufprall bis zu einer bestimmten Geschwindigkeit die Kräfte aufzunehmen, ohne daß die Fahrzeugkarosserie beschädigt wird. Bei höheren Aufprallgeschwindigkeiten wird der Vorbau des Fahrzeuges mit den Längsträgern 9 und 11 verformt. Die in den Längsträgern aufgenommenen Pralldämpfer werden jedoch nur nach hinten verschoben und über die an den Enden der Pralldämpfer festgemachten Seilabschnitte 41 und 43 die auftretende Relativverschiebung auf die Sicherheitseinrichtungen – wie in Verbindung mit Fig. 5 beschrieben – übertragen.

## Patentansprüche

1. Fahrzeug mit einer Vorrichtung zur Nutzung der Aufprallenergie für eine Sicherheitseinrichtung zum Schutz der Fahrzeuginsassen, wobei durch die bei einem Frontaufprall ab einer bestimmten Größenordnung auftretende Relativbewegung zwischen einem im Frontbereich des Fahrzeuges angeordnetem Bauteil der Vorrichtung und einem davon entfernten Karosserieabschnitt unter Zwischenschaltung eines Seiles die Sicherheitseinrichtung in Wirkstellung gelangt, gekennzeichnet durch folgende Merkmale:

a) das Fahrzeug ist mit einem Mittel- oder Heckmotor (7, 7') ausgestattet,

b) die Vorrichtung umfaßt wenigstens ein längsverschiebliches, drucksteifes Längsglied (23, 31, 35, 37, 39, 53),

c) das Längsglied (23, 31, 35, 37, 39, 53) ist derart im Fahrzeug festgelegt oder dimensioniert, daß es trotz Verformung des Vorbaus des Fahrzeugs im wesentlichen ohne Beschädigung verschoben wird,

d) das Längsglied (23, 31, 35, 37, 39, 53) endet im Abstand von der vorderen Karosseriebegrenzung und

e) der vom Frontbereich des Fahrzeuges abgewandte Abschnitt des Längsgliedes (23, 31, 35, 37, 39, 53) wirkt mit wenigstens einem zur Sicherheitseinrichtung führendem Seil (15, 17, 41, 43) zusammen.

2. Fahrzeug nach Anspruch 1 mit einem eine Antriebswelle aufnehmenden Zentralrohr zwischen seinem Antriebsaggregat und seiner Vorderachse, dadurch gekennzeichnet, daß das Längsglied durch einen über die Vorderachse (25) hinaus verlängerten Abschnitt (29) des Zentralrohres (27) gebildet ist.

3. Fahrzeug nach Anspruch 1 oder 2, dadurch gekennzeichnet, daß das Längsglied (31, 35) nach vorne V-förmig aufgezweigt ist.

4. Fahrzeug nach Anspruch 1 mit zwei im Frontbereich angeordneten Längsträgern, gekennzeichnet durch folgende Merkmale:
a) in jedem Längsträger (9, 11) ist ein Längsglied (37, 39) angeordnet,
b) die Längsträger (9, 11) sind etwa im Endbereich der Längsglieder (37, 39) auf den einander zugewandten Seiten mit einer Aussparung (45, 47) versehen, durch die ein am Längsglied (37, 39) festgelegtes Seil (41, 43) hindurchgeführt ist,
c) die beiden Seile (41, 43) sind V-förmig nach hinten geführt, an der Spitze miteinander verbunden und von dort über einen gemeinsamen, von einer Hülse (47) umgebenen Seilabschnitt (45) in Richtung auf die Sicherheitseinrichtung (19, 21) zugeführt.

5. Fahrzeug nach Anspruch 4, mit im Frontbereich angeordndeten und in Längsträgern aufgenommenen Pralldämpfern für einen Stoßfänger, dadurch gekennzeichnet, daß die in den Längsträgern (9, 11) angeordneten Gehäuse (53) der Pralldämpfer die Längsglieder bilden.

## Claims

1. Vehicle with a device for utilizing the impact energy for a safety device to protect the vehicle occupants, in which the safety device reaches its operating position due, with the interposition of a cable, to the relative movement occurring, on frontal impact above a certain magnitude, between a component, positioned in the front part of the car, of the device and a section of the body at a distance from it, characterized by the following features:
a) the vehicle is fitted with a central or rear motor (7, 7'),
b) the device includes at least one lengthwise member (23, 31, 35, 37, 39, 53) which can be displaced lengthwise and is stiffened against compression,
c) the lengthwise member (23, 31, 35, 37, 39, 53) is attached to the vehicle or dimensioned in such a way that it is displaced essentially without damage in spite of deformation of the front part of the vehicle,
d) the lengthwise element (23, 31, 35, 37, 39, 53) terminates at a distance from the forward limit of the body, and
e) the section of the lengthwise element (23, 31, 35, 37, 39, 53) facing away from the front part of the vehicle operates in conjunction with at least one cable (15, 17, 41, 43) leading to the safety device.

2. Vehicle according to Claim 1 with a central tube, containing a drive shaft, between its drive unit and its front axle, characterized in that the lengthwise member is formed by a section (29) of the central tube (27) extended beyond the front axle (25).

3. Vehicle according to Claims 1 or 2, characterized in that the lengthwise member (31, 35) is branched at the front in a V-shape.

4. Vehicle according to Claim 1 with two lengthwise supports positioned in the front part, characterized by the following features:
a) one lengthwise member (37, 39) is positioned in each lengthwise support (9, 11),
b) the lengthwise supports (9, 11) are each provided with an opening (45, 47) near the end part of the lengthwise member (37, 39) on the sides facing towards one another through which is passed a cable (41, 43) attached to the lengthwise member (37, 39),
c) the two cables (41, 43) are led to the rear in a V-shape, are joined to one another at the apex, and from there are led in the direction of the safety device (19, 21) by a common cable section (45) surrounded by a sleeve (47).

5. Vehicle according to Claim 4, with shock absorbers, positioned in the front part and contained in the lengthwise supports, for a bumper, characterized in that the housings (53) of the shock absorbers positioned in the lengthwise supports (9, 11) form the lengthwise members.

## Revendications

1. Véhicule automobile équipé d'un dispositif destiné à mettre à profit l'énergie d'impact pour un dispositif de sécurité assurant la protection des occupants du véhicule, le dispositif de sécurité étant mis en position active, par l'intermédiaire d'un câble, par le mouvement relatif qui se produit, en cas de choc dépassant un ordre de grandeur déterminé, entre un élément du dispositif placé dans la région avant du véhicule et une partie de la carrosserie distante de cet élément, caractérisé en ce que:
a) le véhicule est équipé d'un moteur central ou arrière (7, 7'),
b) le dispositif comprend au moins un élément longitudinal (23, 27, 31, 35, 37, 39, 53) rigide à la compression et déplaçable dans la direction de la longueur,
c) l'élément longitudinal (23, 27, 31, 35, 37, 39, 53) est fixé dans le véhicule ou dimensionné de telle manière qu'en dépit d'une déformation de la structure avant du véhicule, il soit déplacé pratiquement sans être endommagé,
d) l'élément longitudinal (23, 27, 31, 35, 37, 39, 53) se termine à distance de la limite antérieure de la carrosserie, et
e) la partie de l'élément longitudinal (23, 27, 31, 35, 37, 39, 53) située à l'opposé de la région avant du véhicule coopère avec au moins un câble (15, 17, 41, 43) qui aboutit au dispositif de sécurité.

2. Véhicule automobile selon la revendication 1 comportant, entre son groupe moteur et son essieu avant, un tube central qui contient l'arbre de transmission, caractérisé en ce que l'élément longitudinal est constitué par une partie (29) du tube central (27) se prolongeant au-delà de l'essieu avant (25).

3. Véhicule automobile selon la revendication 1 ou 2, caractérisé en ce que l'élément longitudinal (31, 35) est bifurqué vers l'avant en forme de V.

4. Véhicule automobile selon la revendication 1 comportant deux longerons situés dans sa région avant, caractérisé en ce que:

a) un élément longitudinal (37, 39) est monté dans chaque longeron (9, 11),

b) les longerons (9, 11) sont munis, à peu près au niveau des extrémités des éléments longitudinaux (37, 39) et sur leurs côtés dirigés l'un vers l'autre, d'un évidement (45, 47) à travers lequel passe un câble (41, 43) fixé à l'élément longitudinal (37, 39),

d) les deux câbles (41, 43) s'étendent vers l'arrière en formant un V, se réunissent à la pointe du V et, de là, s'étendent en direction du ou des dispositifs de sécurité (19, 21) en formant un segment de câble commun (45) qui est entouré par une gaine (47).

5. Véhicule automobile selon la revendication 4, comportant des amortisseurs de rebondissement pour un pare-chocs, disposés dans la région avant et reçus dans des longerons, caractérisé en ce que les carters (53) des amortisseurs de rebondissement, disposés dans les longerons (9, 11), constituent les éléments longitudinaux.

EP 0 234 003 B1

FIG.1

FIG.2

FIG.3

FIG.4

FIG.5a

FIG.5b

FIG.6